# EUROPEAN PATENT APPLICATION

(11) **EP 2 221 712 A1**
(43) Date of publication of application: **25.08.2010**
(21) Application number: 08860934.2
(22) Date of filing: 15.12.2008
(51) Int. Cl.: G06F 3/041, G06F 3/045

(54) **TOUCH PANEL AND TOUCH PANEL DISPLAY DEVICE**

(30) Priority: 14.12.2007 JP 2007323432
(71) Applicant: Kyocera Corporation, Kyoto-shi Kyoto 612-8501 (JP)
(72) Inventor: NOZAWA, Junichi, Kirishima-shi Kagoshima 899-5195 (JP)
(74) Representative: HOFFMANN EITLE
(86) International application number: PCT/JP2008/072797
(87) International publication number: WO 2009/078391

(57) **Abstract**

Disclosed is a touch panel (X1) comprising a first base (10), a second base (20) and a conductive connection member (30), wherein the first base (10) and the second base (20) are bonded with each other. The second base (20) has a wiring electrode (23) electrically connected to a first region (12a) of a first resistive film (12) and a wiring electrode (24) electrically connected to a second region (12b) of the first resistive film (12). The conductive connection member (30) has a first connection member (30A), which is so arranged as to surround a second resistive film (22) when viewed in plan and electrically connects the first region (12a) of the first resistive film (12) with the wiring electrode (23), which is arranged between the first connection member (30A) and the second resistive film (22) when viewed in plan and electrically connects the second region (12b) of the first resistive film (12) with the wiring electrode (24).

## Description

### TECHNICAL FIELD

The invention relates to a touch panel that is disposed on a display screen such as a liquid crystal display. Further, the invention relates to a touch panel display device that is configured by disposing a touch panel on a display device.

### BACKGROUND ART

As an example of a touch panel display device, for example, a display device that is configured by disposing a touch panel that detects input coordinates based on a change in resistance by a pressing operation in a liquid crystal display device is known.

The touch panel includes a first base that is formed by a transparent resistive film and a wiring electrode connected to the transparent resistive film on a bottom surface of a flexible transparent insulating base and a second base that is formed by a transparent resistive film and a wiring electrode connected to the transparent resistive film on a top surface of a transparent insulating base. The transparent resistive films of the first base and the second base are disposed to face each other. In the touch panel having the above configuration, the first base is bent by pressing the predetermined position of the touch panel, and the transparent resistive film of the first base and the transparent resistive film of the second base contact with each other at the pressed place. This contact place is detected by measuring electric resistance of a transparent electrode and is read as input information (for example, refer to Patent Documents 1 and 2).

The touch panel that is disclosed in Patent Document 1 has the configuration where an upper substrate made of glass is disposed to face a lower substrate made of the glass. In the lower substrate, a transparent conductor, a feeding wiring line that feeds power to the transparent conductor, and a routing wiring line to feed power to a transparent conductor of the upper substrate side are provided in an inner surface thereof (the surface facing with the upper substrate). In the upper substrate, the transparent conductor is provided in an inner surface thereof (the surface facing with the lower substrate). The routing wiring line in the lower substrate and the transparent conductor in the upper substrate are electrically connected to each other through an electrode made of an isotropic conductive adhesive.

Meanwhile, a screen input type display device that is disclosed in Patent Document 2 has the configuration where a second base made of glass is disposed to face a first base made of a polyethylene terephthalate film. In the first base, a first resistive film that is made of ITO and a wiring electrode that is electrically connected to the first resistive film are provided in an inner surface thereof (the surface facing the second base). In the second base, a second resistive film that is made of ITO, a wiring electrode that is electrically connected to the second resistive film, and an inter-base connection wiring electrode that is electrically connected to the first resistive film are provided in an inner surface thereof (the surface facing the first base). The wiring electrode and the inter-base connection wiring electrode that are electrically connected to the first resistive film are electrically connected through a conductive adhesive member. The conductive adhesive member is made of an adhesive material and conductive particles buried in the adhesive material.

Patent Document 1: Japanese Patent Application Laid-open No. H08-203382
Patent Document 2: Japanese Patent Application Laid-open No. 2002-41231

### DISCLOSURE OF INVENTION

### PROBLEMS TO BE SOLVED BY THE INVENTION

However, in the touch panel that is disclosed in Patent Document 1, the upper and lower substrates are bonded to surround the transparent conductor of the lower substrate side by using an adhesive having no conductivity at a position outside of the electrode made of the isotropic conductive adhesive in plan view, in order to realize main bonding of the upper and lower substrates while suppressing generation of unnecessary electric conduction. Accordingly, in the touch panel that is disclosed in Patent Document 1, it is difficult to sufficiently decrease a device size.

In the screen input type display device that is disclosed in Patent Document 2, the device size can be further decreased, as compared with the technology disclosed in Patent Document 1. Meanwhile, in the screen input type display device that is disclosed in Patent Document 2, the conductive adhesive member and an adhesive tape having no conductivity need to be used together, in order to realize main bonding of the first base and the second base while suppressing generation of unnecessary electric conduction. Accordingly, in the screen input type display device that is disclosed in Patent Document 2, the thermal stress difference may be generated between different materials of the conductive adhesive member and the adhesive tape. Further, in the screen input type display device that is disclosed in Patent Document 2, gaps or overlapping may be easily generated in joints of the conductive adhesive member and the adhesive tape, and it is difficult to increase uniformity of touch sensitivity.

Accordingly, it is an object of the invention to provide a touch panel and a touch panel display device that can sufficiently decease a device size and sufficiently increase uniformity of touch sensitivity while reducing an influence due to the thermal stress difference.

### MEANS FOR SOLVING PROBLEM

A touch panel according to a first aspect of the present invention includes: a first base having a first resistive film; a second base having a second resistive film and a wiring electrode; and a conductive connecting member electrically connecting the first resistive film and the wiring electrode. The first base and the second base are bonded so that the first resistive film and the second resistive film face each other. The wiring electrode has a first electrode portion that is electrically connected to a first region of the first resistive film and a second electrode portion that is electrically connected to a second region of the first resistive film different from the first region. The conductive connecting member has a first connecting member and a second connecting member.
The first connecting member is positioned to surround the second resistive film in plan view, electrically connects the first region and the first electrode portion, and contains an adhesive component. The second connecting member is positioned between the first connecting member and the second resistive film in plan view and electrically connects the second region of the first resistive film and the second electrode portion.

A touch panel according to a second aspect of the invention includes a first base that has a first resistive film, a second base that has a wiring electrode and a second resistive film, a first connecting member that contains an adhesive component, and a second connecting member. The wiring electrode has a first electrode portion that is electrically connected to a first region of the first resistive film and a second electrode portion that is electrically connected to a second region of the first resistive film different from the first region of the first resistive film and a second resistive film. The first connecting member is positioned to surround the second resistive film in plan views, electrically connects the first region of the first resistive film and the first electrode portion. The second connecting member is positioned between the first connecting member and the second resistive film in plan view and electrically connects the second region of the first resistive film and the second electrode portion.

A touch panel display device according to the present invention includes: a display panel; and a touch panel where a principal surface of the first base or the second base is disposed to face a principal surface of the display panel.

### EFFECT OF THE INVENTION

The touch panel according to the invention, the first base and the second base are bonded by the first connecting member containing an adhesive component. For this reason, the touch panel is not provided with a bonding adhesive to surround the outside thereof, separately from the conductive member to electrically connect the first region of the first resistive film and the first wiring electrode. As a result, a device size can be decreased. In the touch panel, since main bonding of the first base and the second base is performed by only the first connecting member, as compared with the case where a plurality of kinds of adhesive members are used in the main bonding, an influence due to the thermal stress difference can be reduced, and a gap or overlapping can be suppressed from being generated. Accordingly, this touch panel is preferable in that the size can be sufficiently decreased, and uniformity of touch sensitivity can be sufficiently improved while the influence due to the thermal stress difference is reduced.

Since the touch panel display device according to the invention includes the touch panel according to the invention, the effect of the touch panel according to the invention can be achieved. That is, in the touch panel display device, the device size can be sufficiently decreased, and uniformity of touch sensitivity can be sufficiently improved while the influence due to the thermal stress difference is reduced.

### BRIER DESCRIPTION OF THE DRAWINGS

FIG. 1 is an exploded perspective view illustrating a schematic configuration of a touch panel according to a first embodiment of the invention.
FIG. 2 is a plan view illustrating a state where a fist base is removed, in the touch panel illustrated in FIG. 1.
FIG. 3 is a cross-sectional view taken along the line III-III of FIG. 1.
FIG. 4 is a cross-sectional view taken along the line IV-IV of FIG. 1.
FIG. 5 is a cross-sectional view taken along the line V-V of FIG. 1.
FIGS. 6 is a cross-sectional view illustrating a series of processes of when the first base and a second base of the touch panel illustrated in FIG. 1 are bonded to each other.
FIG. 7 is an exploded perspective view illustrating the schematic configuration of a touch panel according to a second embodiment of the invention.
FIG. 8 is a plan view illustrating a state where a first base is removed, in the touch panel illustrated in FIG. 7.
FIG. 9 is a cross-sectional view taken along the line IX-IX of FIG. 7.
FIG. 10 is a cross-sectional view taken along the line X-X of FIG. 7.
FIG. 11 is a cross-sectional view taken along the line XI-XI of FIG. 7.
FIG. 12 is a cross-sectional view illustrating the schematic configuration of a touch panel display device that includes the touch panel illustrated in FIG. 1.
FIG. 13 is a perspective view illustrating the schematic configuration of a liquid crystal display panel of a liquid crystal display device in the touch panel display device illustrated in FIG. 12.
FIG. 14 is an enlarged cross-sectional view of essential parts of the liquid crystal display panel illustrated in FIG. 13.

### EXPLANATION OF LETTERS OR NUMERALS

- X1, X2: Touch panel
- Y: Touch panel display device
- Z: Liquid crystal display device
- 10: First base
- 12: First resistive film
- 20, 20': Second base
- 22, 22': Second resistive film
- 23, 23': Wiring electrode (first electrode portion)
- 24, 24': Wiring electrode (second electrode portion)
- 30, 30': Conductive connecting member
- 30A, 30A': First connecting member
- 30B, 30B': Second connecting member
- 31: First particle (conductive component)
- 32: Second particle (conductive component)
- 33: Adhesive material (adhesive component)
- 40: Liquid crystal display panel

### BEST MODE(S) FOR CARRYING OUT THE INVENTION

Hereinafter, a touch panel and a touch panel display device according to an embodiment of the invention will be described with reference to the accompanying drawings.

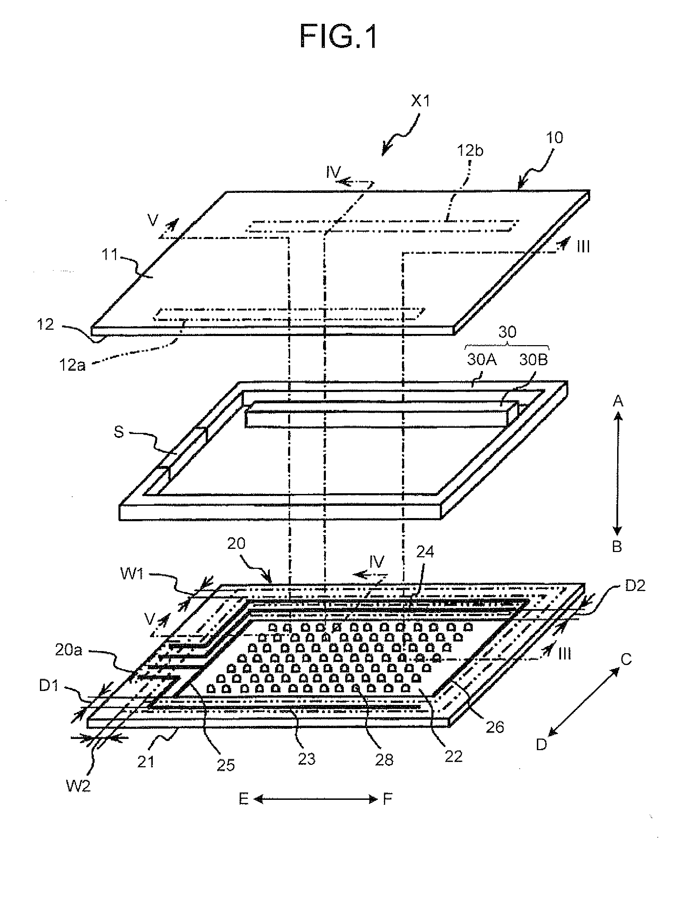

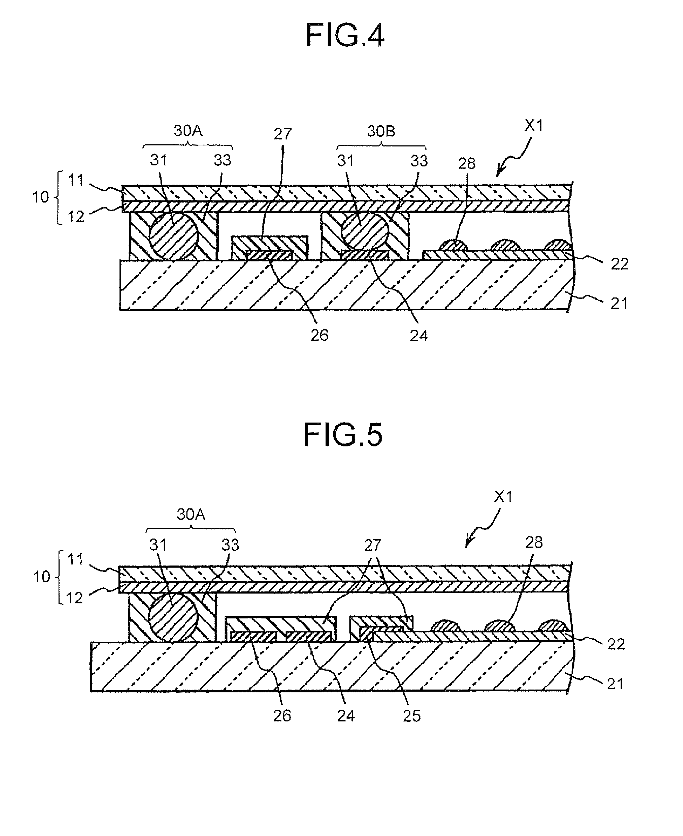

First, a touch panel X1 according to a first embodiment of the invention will be described with reference to FIGS. 1 to 6.

As illustrated in FIG. 1, the touch panel X includes a first base 10, a second base 20, and a conductive adhesive member 30.

The first base 10 includes a transparent insulating substrate 11 and a first resistive film 12. In this embodiment, the first base 10 has flexibility as a whole, and is configured to have an approximately rectangular shape in plan view. The shape of the first base 10 in plan view is not limited to the approximately rectangular shape and may be other shape.

The transparent insulating base 11 is a member that performs a function of supporting the first resistive film 12, and has a light transmitting property in a direction crossing a principal surface thereof and an electric insulating property. In this case, the light transmitting property means having permeability with respect to visible light. As a material for forming the transparent insulating substrate 11, light transmitting glass or light transmitting plastic is exemplified. However, the material for forming the transparent insulating substrate 11 is preferably the light transmitting glass from the point of view of heat resistance. When the light transmitting glass is adopted as the material for forming the transparent insulating substrate 11, the thickness of the transparent insulating substrate 11 is preferably set to a value greater than or equal to 0.1 mm and less than or equal to 0.3 mm to secure sufficient shape stability and flexibility.

The first resistive film 12 contributes to detection of potential at a contact point with a second resistive film 22 of the second base 20 to be described below, and has a light transmitting property in a direction crossing a principal surface thereof. The first resistive film 12 in this embodiment is formed to expand over an approximately entire surface of the principal surface of the transparent insulating base 11 positioned at the side of a direction B, using a conductive material having predetermined electric resistance. A resistance value of the first resistive film 12 is 200 Ω/□ to 1500 Ω/□. In this embodiment, the thickness of the first resistive film 12 is set to 2.0 × 10⁻² µm or less, from the point of view of high resistance. As a material for forming the first resistive film 12, a light transmitting conductive material, such as indium tin oxide (ITO), antimony trioxide (ATO), SnO, and ZnO, is exemplified.

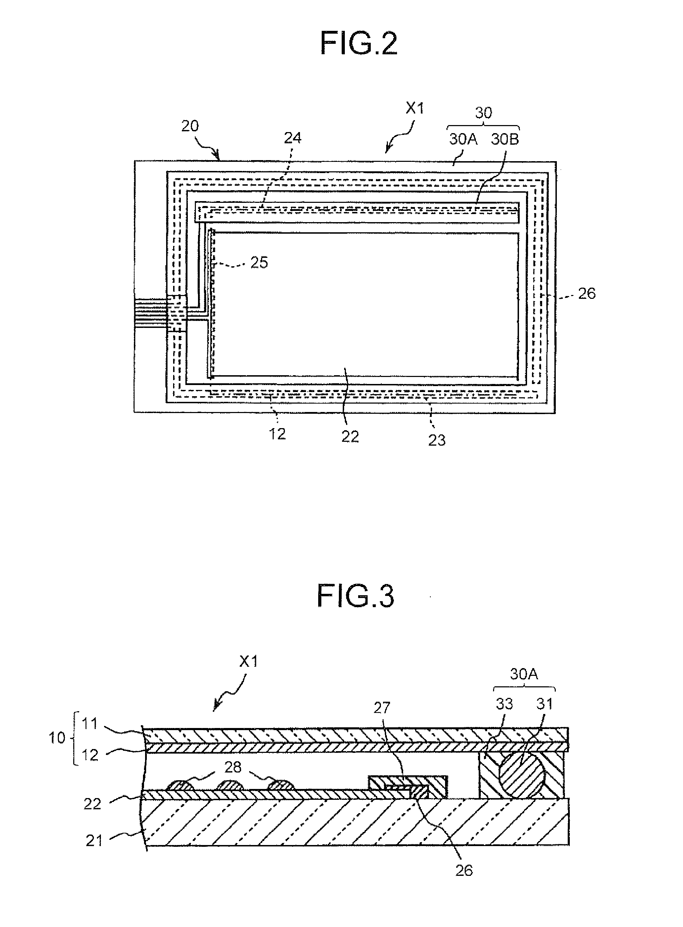

The second base 20 includes a transparent insulating substrate 21, the second resistive film 22, wiring electrodes 23, 24, 25, and 26, an insulating layer 27, and dot spacers 28. In the second base 20, an external conductive region 20a that is a region connected to a conductive member (for example, flexible printed circuit (FPC)) is provided. In this embodiment, the second base 20 is configured to have an approximately rectangular shape in plan view and is disposed to face the first base 10. The shape of the second base 20 in plan view is not limited to the approximately rectangular shape and may be other shape. In FIGS. 1 and 2, the insulating layer 27 is omitted from the point of view of viewability of the drawings.

The transparent insulating substrate 21 has a function of supporting the second resistive film 22, the wiring electrodes 23, 24, 25, and 26, the insulating layer 27, and the dot spacer 28, and has a light transmitting property in a direction crossing a principal surface thereof and an electric insulating property. As a material for forming the transparent insulating substrate 21, light transmitting glass or light transmitting plastic is exemplified. However, the material for forming the transparent insulating substrate 21 is preferably the light transmitting glass from the point of view of heat resistance. When the light transmitting glass is adopted as the material for forming the transparent insulating substrate 21, the thickness of the transparent insulating substrate 21 is preferably set to 0.7 mm or more to secure sufficient shape stability.

The second resistive film 22 contributes to detection of potential at a contact point with the first resistive film 12 of the first base 10, and has a light transmitting property in a direction crossing a principal surface thereof. The second resistive film 22 in this embodiment is formed in a region (in a formation region of the first resistive film 12 in plan view) where a circumferential portion is removed in the principal surface of the transparent insulating substrate 21 positioned at the side of a direction A, using a conductive material having predetermined electric resistance. The light transmitting property and the electric resistance value that are required in the second resistive film 22 are the same as those required in the first resistive film 12. As a material for forming the second resistive film 22, the same material as that of the first resistive film 12 is exemplified.

Each of the wiring electrodes 23 and 24 performs a function of applying a voltage to the first resistive film 12. One end of the wiring electrode 23 is positioned in an end region on the side directed by an arrow D at a connection region by a first connecting member 30A of the conductive connecting member 30, which is described below, to correspond to a first region 12a of the first resistive film 12, and the other end thereof is positioned in the external conductive region 20a of the second base 20. One end of the wiring electrode 24 is positioned in a connection region by a second connecting member 30B of the conductive connecting member 30, which is described below, to correspond to a second region 12b of the first resistive film 12, and the other end thereof is positioned in the external conductive region 20a of the second base 20. Since each of the first region 12a and the second region 12b is positioned in a place that is not directly viewed in FIG. 1, each of the first region 12a and the second region 12b is displayed by a virtual line (two-dot chained line) and visualized.

A resistance value between both ends of the wiring electrodes 23 and 24 is preferably set to be not more than 1/100 of the resistance value between both ends of the first resistive film 12, from the point of view of detection precision of the touch panel X. Each of the wiring electrodes 23 and 24 in this embodiment is composed of a thin metal film (line width: greater than or equal to 0.5 mm and less than or equal to 2.0 mm, thickness:
greater than or equal to 0.5 µm and less than or equal to 2 µm), from the point of view of hardness and shape stability.
As the thin metal film, an aluminum film, an aluminum alloy film, a laminated film of a chromium film and an aluminum film, or a laminated film of a chromium film and an aluminum alloy film is exemplified. When the first resistive film 12 is formed using ITO, the thin metal film is preferably the laminated film of the chromium film and the aluminum film (chromium is disposed between ITO and aluminum) or the laminated film of the chromium film and the aluminum alloy film (chromium is disposed between ITO and aluminum alloy), from the point of view of adhesion with the ITO. As a method of forming the thin metal film, a sputtering method, a deposition method or a chemical vapor deposition (CVD) method is exemplified.

In the touch panel X1, when the thin metal film is the aluminum film, the aluminum alloy film or the laminated film of the chromium film and the aluminum film, easiness of thin film forming and thin film processing (patterning) can be improved and wiring resistance can be relatively decreased.

Each of the wiring electrodes 25 and 26 performs a function of applying a voltage to the second resistive film 22. One end of the wiring electrode 25 is connected to an end of the second resistive film 22 at the side directed by an arrow E, and the other end thereof is positioned in the external conductive region 20a of the second base 20. One end of the wiring electrode 26 is connected to an end of the second resistive film 22 at the side directed by an arrow F and the other end thereof is positioned in the external conductive region 20a of the second base 20.

A resistance value between both ends of the wiring electrodes 25 and 26 is preferably set to be not more than 1/100 of the resistance value between both ends of the second resistive film 22, from the point of view of detection precision of the touch panel X. Each of the wiring electrodes 25 and 26 in this embodiment is composed of a thin metal film (line width: greater than or equal to 0.5 mm and less than or equal to 2 mm, thickness: greater than or equal to 0.5 µm and less than or equal to 2 µm), similar to the wiring electrodes 23 and 24. As the thin metal film, the same material as that of the thin metal film that constitutes the wiring electrodes 23 and 24 is exemplified.

When the thin metal film that constitutes the wiring electrodes 25 and 26 is formed of the aluminum film, the aluminum alloy film, the laminated film of the chromium film and the aluminum film or the laminated film of the chromium film and the aluminum alloy film, easiness of thin film forming and thin film processing (patterning) can be improved and wiring resistance can be relatively decreased.

The insulating layer 27 prevents the wiring electrodes 23, 24, 25, and 26 and the first resistive film 12 from being electrically connected to each other, in a predetermined region other than one end (adhesive region by the conductive adhesive member 30) of the wiring electrodes 23 and 24 and the other ends thereof (region positioned in the external conductive region 20a of the second base 20) and a predetermined region other than the other ends (region positioned in the external conductive region 20a of the second base 20) of the wiring electrodes 25 and 26, and is formed to cover these predetermined regions. As a material for forming the insulating layer 27, the same material as that the dot spacer 28 to be described below is exemplified. Specifically, a thermosetting resin such as a polyester resin or an ultraviolet curable resin such as an acrylic resin is exemplified. In particular, as the material for forming the insulating layer 27, the thermosetting resin is preferred from the point of view of work efficiency in a manufacturing process. The thickness of the insulating layer 27 is preferably set to 10 µm or less, from the point of view of flatness of the touch panel X. In FIGS. 1 and 2, the insulating layer 27 is omitted from the point of view of viewability of the drawings.

The dot spacer 28 performs a function of suppressing unnecessary contact between the first resistive film 12 and the second resistive film 22 in the region other than the predetermined position, when the first resistive film 12 and the second resistive film 22 are made to contact at the predetermined position (when information is to be input). In this embodiment, the dot spacers 28 are disposed at an approximately constant interval in directions CD and EF, on the transparent insulating substrate 21.

The dot spacer 28 is preferably configured such that the dot spacer performs the function of preventing the unnecessary contact between the first resistive film 12 and the second resistive film 22, but it is difficult to view the dot spacer 28. For example, the dot spacer 28 is formed in a semispherical shape where a diameter is 40 µm or less and the height is greater than or equal to 1.0 µm and less than or equal to 3.5 µm. The distance (arrangement pitch) between the dot spacers 28 adjacent to each other in the direction CD or EF is, for example, greater than or equal to 2 mm and less than or equal to 4 mm.

The dot spacers 28 do not need to be formed on the transparent insulating substrate 21 (second base 20) and may be formed on the transparent insulating substrate 11 (first base 10). The dot spacers 28 do not need to be arranged in a matrix at an approximately constant interval.

The dot spacer 28 is formed of the same material (for example, thermosetting resin or ultraviolet curable resin) as that of the insulating layer 27, using a screen printing method, an offset printing method or a photolithography method. If the thermosetting resin is adopted as the material for forming the dot spacer 28, environment resistance such as heat resistance or drug resistance can be improved, which results in securing high reliability during a long period. As the thermosetting resin, an epoxy resin, unsaturated polyester, a urea resin, a melamine resin or a phenol resin is exemplified. Meanwhile, if the ultraviolet curable resin is adopted as the material for forming the dot spacer 28, curing time can be shortened as compared with the thermosetting resin. As a result, manufacturing efficiency can be improved. As the ultraviolet curable resin, an acrylic resin or an epoxy resin is exemplified. As the material for forming the dot spacer 8, the same material as that of the formation material of the insulating layer 27 is preferably adopted from the point of view of manufacturing efficiency.

The conductive connecting member 30 has the first connecting member 30A and the second connecting member 30B. The conductive connecting member 30 in this embodiment has a notch portion where a sealing member S is disposed. As the sealing member S, an insulating resin such as a thermosetting resin or an ultraviolet curable resin is exemplified. In particular, the ultraviolet curable resin is preferably adopted as the sealing member S. As such, if the sealing member S is formed of the ultraviolet curable resin, an influence due to heat can be reduced as compared with the thermosetting resin, and work efficiency can be improved.

The first connecting member 30A performs a function of bonding the first base 10 and the second base 20 and a function of electrically connecting the first region 12a of the first resistive film 12 and one end of the wiring electrode 23. The first connecting member 30A is formed in a frame shape as a whole and is positioned to surround the second resistive film 22 in plan view.

The second connecting member 30B performs a function of bonding the first base 10 and the second base 20, and a function of electrically connecting the second region 12b of the first resistive film 12 and one end of the wiring electrode 24. The second connecting member 30B is formed in a linear shape along the direction EF and is positioned between the first connecting member 30A and the second resistive film 22 in plan view.

The first connecting member 30A and the second connecting member 30B include a first particle 31, a second particle 32, and an adhesive material 33. That is, in the touch panel X1, formation materials of the first connecting member 30A and the second connecting member 30B are the same.

The first particle 31 performs a function of electrically connecting the first resistive film 12 and the wiring electrodes 23 and 24, and has a particle diameter that is larger than that of the second particle 32 to be described below. The first particle 31 is in a state where the first particle is compressed more than the second particle 32 through the first base 10 and the second base 20. That is, the first particle 31 has conductivity, and an elastic deformation ratio thereof is larger than that of the second particle 32. In this embodiment, the first particle 31 is configured to include a plastic ball and a conductive material (gold or nickel) to cover a surface of the plastic ball. In this embodiment, as the first particle 31, a particle having an approximately spherical shape is adopted from the point of view of suppressing damage of the first resistive film 12 and the wiring electrodes 23 and 24 contacting the first particle 31. However, the shape of the first particle 31 is not limited to the above shape, and the first particle 31 may have, for example, a polyhedral shape. In this embodiment, the particle diameter of the first particle 31 is described as 13.5 µm. However, the particle diameter of the first particle 31 is not limited, and the first particle 31 may have an arbitrary particle diameter in a range of particle diameters where the first particle 31 is not excessively elastically deformed while a sufficient contact area with respect to the first resistive film 12 and the wiring electrodes 23 and 24 is secured.

The second particle 32 performs a function of defining the distance between the first base 10 and the second base 20, and has a particle diameter and an elastic deformation ratio smaller than those of the first particle 31. In this embodiment, as the second particle 32, a silica sphere (spherical particle mainly made of silicon dioxide) is adopted from the point of view of definition easiness of the distance of the first base 10 and the second base 20. However, the second particle 32 is not limited thereto, and glass fiber may be adopted as the second particle 32. In this embodiment, as the second particle 32, a particle having an approximately spherical shape is adopted from the point of view of suppressing damage from being applied to the first resistive film 12 and the wiring electrodes 23 and 24 contacting the second particle 32. However, the shape of the second particle 32 is not limited to the above shape, and the second particle 32 may have, for example, a polyhedral shape. In this embodiment, the particle diameter of the second particle 32 is described as 12 µm, but the particle diameter is not limited.

The adhesive material 33 contributes to bonding of the first base 10 and the second base 20. As the adhesive material 33, a thermosetting resin such as an epoxy resin or an ultraviolet curable resin such as an acrylic resin is exemplified. In particular, as the adhesive material 33, the thermosetting resin is preferably adopted from the point of view of work efficiency in a manufacturing process.

Next, an example of a bonding method of the first base 10 and the second base 20 based on the first and second connecting members 30A and 30B will be described. The first and second connecting members 30A and 30B are obtained by dispersing the first particle 31 and the second particle 32 in the adhesive material 33, and the first connecting member 30A and the second connecting member 30B are formed of the same material. As the adhesive material 33, the thermosetting resin is adopted from the point of view of work efficiency in a manufacturing process.

First, the first and second connecting members 30A and 30B are printed in a predetermined region on a top surface (formation surface of the wiring electrodes 23 and 24) of the second base 20. As illustrated in FIGS. 1 and 2, the first connecting member 30A is formed in a frame region that is positioned to surround the second resistive film 22. Meanwhile, the second connecting member 30B is formed in a region (region that corresponds to the second region 12b of the first resistive film 12) that is positioned between one side in the above-described frame region and an edge of the second resistive film 22.

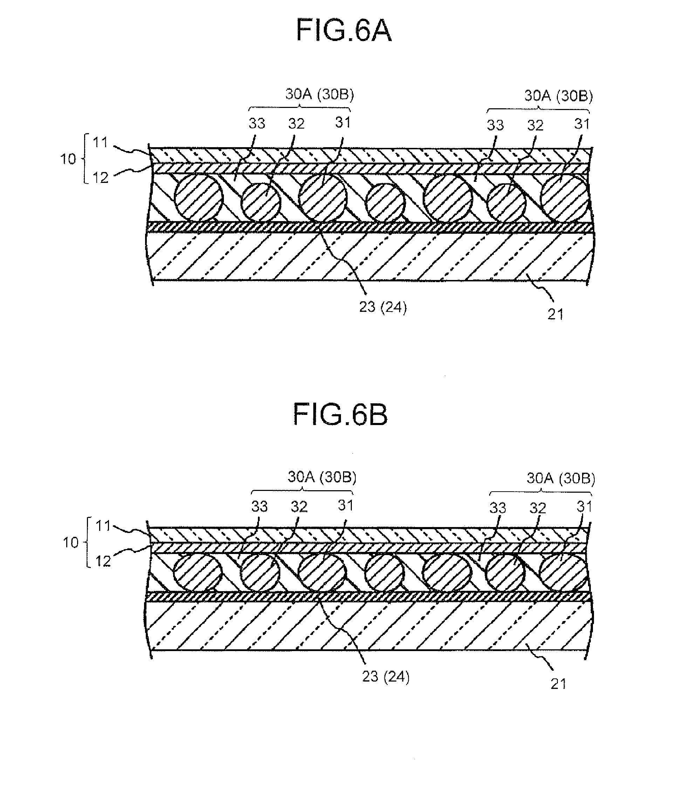

Next, as illustrated in FIG. 6A, the first base 10 is aligned to the second base 20 where the first and second connecting members 30A and 30B are printed, the first base 10 and the second base 20 are bonded through the first and second connecting members 30A and 30B, and a bonded structure is manufactured.

Next, as illustrated in FIG. 6B, the first base 10 and the second base 20 of the manufactured structure are pressurized in a direction where the first base and the second base come close to each other. The pressurization in this embodiment is performed while the first particle 31 is deformed by the first base 10 and the second base 20 to increase an elastic deformation ratio and/or an aspect ratio, until the second particle 32 abuts on both the first base 10 and the second base 20.

Next, the first and second connecting members 30A and 30B are heated to the hardening temperature of the adhesive material 33 to be hardened, while the pressurization state illustrated in FIG. 6B is maintained. In this way, the adhesive material 33 is hardened, and the first base 10 and the second base 20 are bonded to each other. The first resistive film 12 and the wiring electrodes 23 and 24 are electrically connected by the first particle 31 interposed therebetween.

In the touch panel X1 according to this embodiment, the first base 10 and the second base 20 are bonded by the first connecting member 30A containing an adhesive component. For this reason, the touch panel X1 is not provided with a bonding adhesive to surround the outside thereof, separately from the first connecting member 30A to electrically connect the first region 12a of the first resistive film 12 and the wiring electrode 23.
As a result, a device size can be decreased. In the touch panel X1, since main bonding of the first base 10 and the second base 20 is performed by only the first connecting member 30A, as compared with the case where a plurality of kinds of adhesive members are used in the main bonding, an influence due to the thermal stress difference can be reduced, and a gap or overlapping can be suppressed from being generated. Accordingly, the touch panel X1 is preferable in that the size can be sufficiently decreased, and uniformity of touch sensitivity can be sufficiently improved while the influence due to the thermal stress difference is reduced.

In the touch panel X1, the wiring electrodes 23 and 24 are composed of the thin metal film formed using a normal thin film forming method. For this reason, in the touch panel X1, the first particle 31 and the second particle 32 can be suppressed from biting into the wiring electrodes 23 and 24 (forming concave portions). Accordingly, in the touch panel X1, even though the first particle 31 or the second particle 32 moves, a contact area can be prevented from decreasing due to the concave portions formed in the wiring electrodes 23 and 24.

In the touch panel X1 according to this embodiment, the formation materials of the first connecting member 30A and the second connecting member 30B are the same. Accordingly, in the touch panel X1 , since the first connecting member 30A and the second connecting member 30B are formed by one process, manufacturing efficiency can be improved.

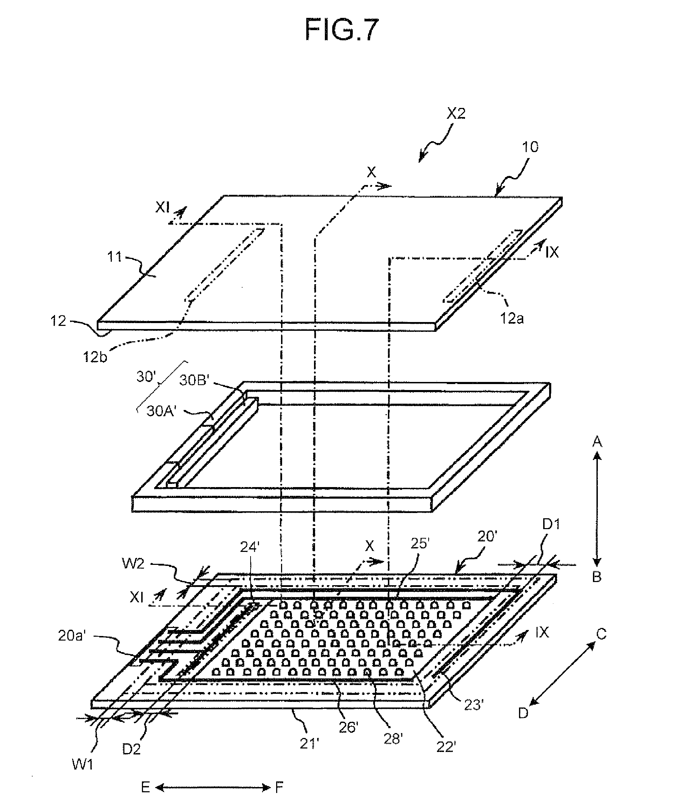

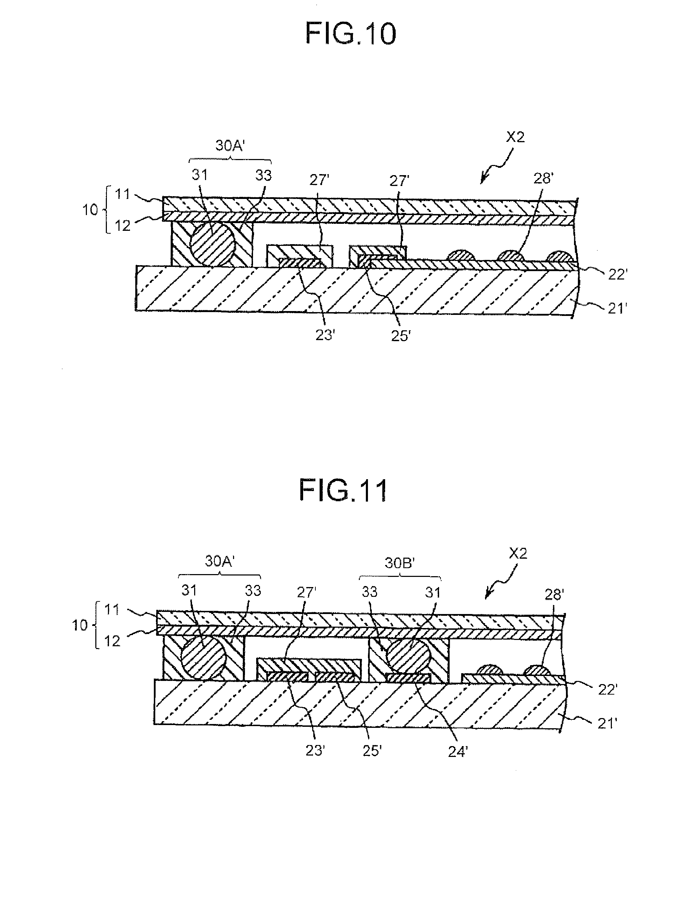

Next, a touch panel X2 according to a second embodiment of the invention will be described with reference to FIGS. 7 to 11. The touch panel X2 that are illustrated in these drawings is different from the touch panel X1 in that a second base 20' and a conductive connecting member 30' are adopted, instead of the second base 20 and the conductive connecting member 30. The other configuration of the touch panel X2 is the same as that of the touch panel X1, and the same components are denoted by the same reference numerals.

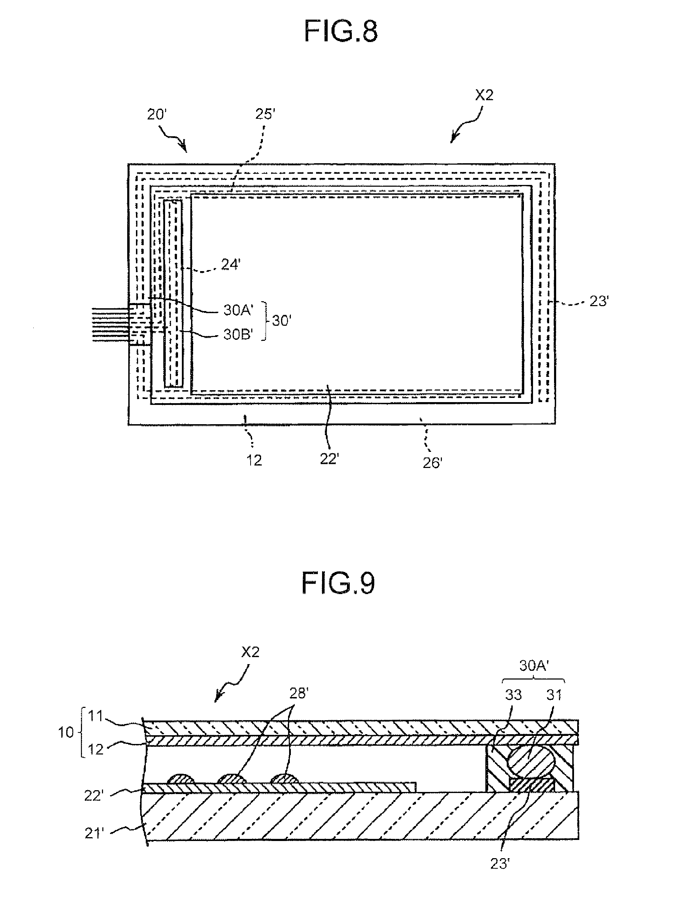

The second base 20' includes a transparent insulating base 21', a second resistive film 22', wiring electrodes 23', 24', 25', and 26', an insulating layer 27', and dot spacers 28'. In the second base 20', an external conductive region 20a' that is a region connected to a conductive member (for example, FPC) outside the drawings is provided. In this embodiment, the second base 20' is configured to have an approximately rectangular shape in plan view and is disposed to face the first base 10. In FIGS. 7 and 8, the insulating layer 27' is omitted from the point of view of viewability of the drawings.

The transparent insulating base 21' is a member that supports the second resistive film 22', the wiring electrodes 23', 24', 25', and 26', the insulating layer 27', and the dot spacer 28', and has the same configuration as that of the transparent insulating base 21 of the above-described touch panel X1.

The second resistive film 22' contributes to detection of potential at a contact point with a first resistive film 12 of the first base 10 and has the same configuration as that of the second resistive film 22 of the above-described touch panel X1.

Each of the wiring electrodes 23' and 24' performs a function of applying a voltage to the first resistive film 12. One end of the wiring electrode 23' is positioned in an end region at the side directed by an arrow F in a connection region by the first connecting member 30A of the conductive connecting member 30 to correspond to the first region 12a of the first resistive film 12, and the other end thereof is positioned in the external conductive region 20a' of the second base 20'.
One end of the wiring electrode 24' is positioned in a connection region by the second connecting member 30B of the conductive connecting member 30 to correspond to the second region 12b of the first resistive film 12, and the other end thereof is positioned in the external conductive region 20a' of the second base 20'. In this embodiment, the other configuration of the inter-base connection wiring electrodes 23' and 24' is the same as that of the wiring electrodes 23 and 24 of the above-described touch panel X1.

Each of the wiring electrodes 25' and 26' performs a function of applying a voltage to the second resistive film 22'. One end of the wiring electrode 25' is connected to an end of the second resistive film 22' at the side directed by an arrow C, and the other end thereof is positioned in the external conductive region 20a' of the second base 20'. One end of the wiring electrode 26' is connected to an end of the second resistive film 22' at the side directed by an arrow D and the other end thereof is positioned in the external conductive region 20a' of the second base 20'. In this embodiment, the other configuration of the wiring electrodes 25' and 26' is the same as that of the wiring electrodes 25 and 26 of the above-described touch panel X1.

The insulating layer 27' prevents the wiring electrodes 23', 24', 25', and 26' and the first resistive film 12 from being electrically connected to each other, in a predetermined region other than one end (connection region by the conductive connecting member 30) of the wiring electrodes 23' and 24' and the other ends thereof (region positioned in the external conductive region 20a' of the second base 20') and a predetermined region other than the other ends (region positioned in the external conductive region 20a' of the second base 20') of the wiring electrodes 25' and 26', and is formed to cover these predetermined regions. In this embodiment, the other configuration of the insulating layer 27' is the same as that of the insulating layer 27 of the above-described touch panel X1.

The dot spacer 28' performs a function of suppressing unnecessary contact between the first resistive film 12 and the second resistive film 22' in the region other than the predetermined position, when the first resistive film 12 and the second resistive film 22' are made to contact at the predetermined position (when information is input). In this embodiment, the other configuration of the dot spacer 28' is the same as that of the dot spacer 28 of the above-descried touch panel X1.

The conductive connecting member 30' has a first connecting member 30A' and a second connecting member 30B'. The first connecting member 30A' performs a function of bonding the first base 10 and the second base 20' and a function of electrically connecting the first region 12a of the first resistive film 12 and one end of the wiring electrode 23'. The first connecting member 30A' is formed in a frame shape as a whole and is positioned to surround the second resistive film 22' in plan view. The second connecting member 30B' performs a function of bonding the first base 10 and the second base 20', and a function of electrically connecting the second region 12b of the first resistive film 12 and one end of the wiring electrode 24'. The second connecting member 30B' is formed in a linear shape along the direction CD and is positioned between the first connecting member 30A' and the second resistive film 22' in plan view. In this embodiment, the other configuration of the conductive connecting member 30' is the same as that of the conductive connecting member 30' in the above-described touch panel X1.

Even in the touch panel X2 according to this embodiment, since the first base 10 and the second base 20' are bonded by the first connecting member 30A' containing an adhesive component, the same effect as that of the touch panel X1 is achieved. Since the second connecting member 30B' is positioned in the vicinity of the sealing member S, even though the formation materials of the first connecting member 30A' and the sealing member S are different from each other and adhesiveness of an end of the touch panel X2 at the side of the direction E may become relatively low due to the material difference, the adhesiveness can be enhanced by the second connecting member 30B'.

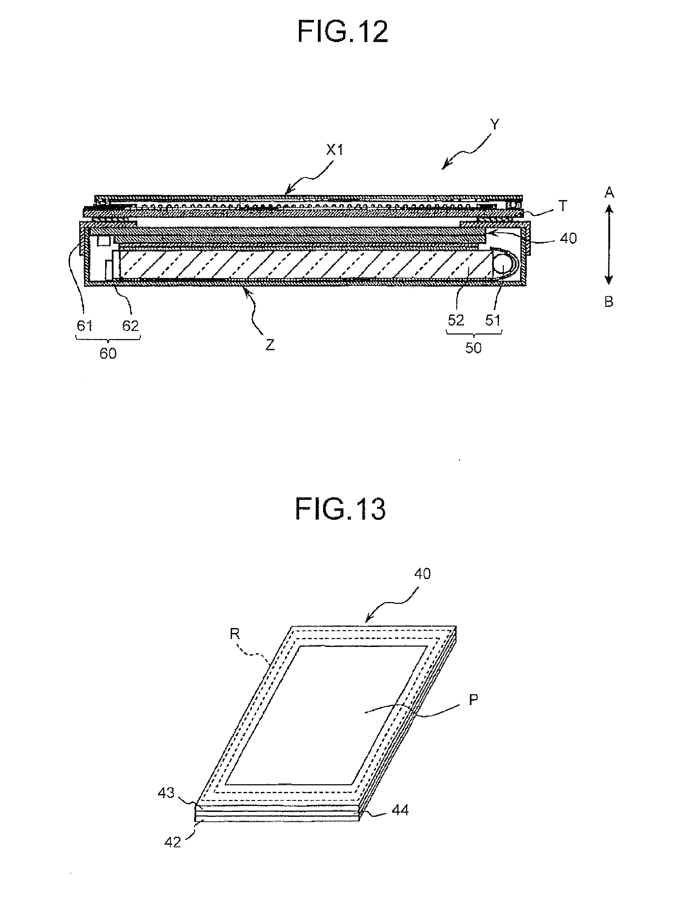

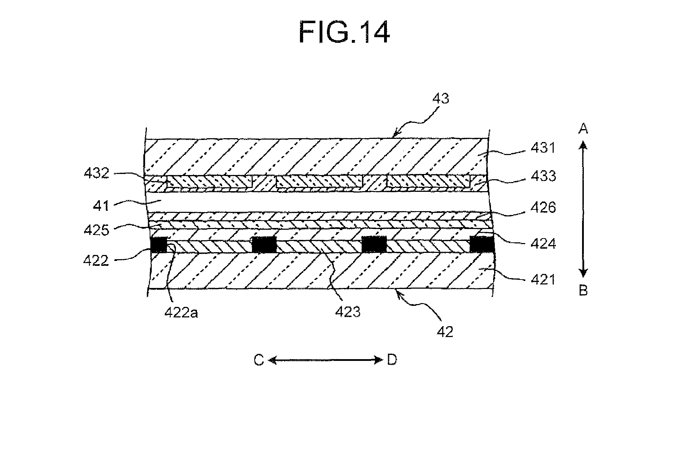

Next, a touch panel display device according to the invention will be described with reference to FIGS. 12 to 14. A touch panel display device Y according to this embodiment includes the touch panel X1 and a liquid crystal display device Z. In this embodiment, as illustrated in FIG. 12, the touch panel display device Y that includes the touch panel X1 according to the first embodiment of the invention illustrated in FIGS. 1 to 5 is adopted and described. However, even when the touch panel X2 according to the second embodiment of the invention illustrated in FIGS. 7 to 11 is adopted, instead of the touch panel X1, the same function and effect are obtained.

The liquid crystal display device Z includes a liquid crystal display panel 40, a backlight 50, and a casing 60.

The liquid crystal display panel 40 includes a liquid crystal layer 41, a first base 42, a second base 43, and a sealing member 44. In the liquid crystal display panel 40, a display region P that includes a plurality of pixels to display an image is provided. The display region P is configured by interposing the liquid crystal layer 41 between the first base 42 and the second base 43 and sealing the liquid crystal layer 41 by the sealing member 44.

The liquid crystal layer 41 shows electrical, optical, mechanical or magnetic anisotropy, and includes liquid crystal that has regularity of a solid and fluidity of a liquid. As this liquid crystal, nematic liquid crystal, cholesteric liquid crystal or smectic liquid crystal is exemplified. In the liquid crystal layer 41, a spacer (not illustrated) that includes a plurality of granular members may be interposed to constantly maintain the thickness of the liquid crystal layer 41.

The first base 42 includes a transparent substrate 421, a light shielding film 422, a color filter 423, a planarizing film 424, a transparent electrode 425, and an alignment film 426.

The transparent substrate 421 is a member that supports the light shielding film 422 and the color filter 423, and seals the liquid crystal layer 41. The transparent substrate 421 is configured to appropriately transmit light in a direction crossing a principal surface thereof. As a material for forming the transparent substrate 421, light transmitting glass or light transmitting plastic is exemplified.

The light shielding film 422 performs a function of shielding light (maintaining the amount of transmitted light to a predetermined value or less), and is formed on a top surface of the transparent substrate 421. The light shielding film 422 has a through-hole 422a that is penetrated in a film thickness direction, in order to transmit the light. As a material for forming the light shielding film 422, a dye or a pigment having a color (for example, black) where a light shielding property is high, a resin (for example, acrylic resin) where carbon is added or Cr is exemplified.

The color filter 423 selectively absorbs a predetermined wavelength of light incident on the color filter 423 and selectively transmits only the predetermined wavelength. As the color filter 423, a red color filter (R) that selectively transmits a wavelength of red visible light, a green color filter (G) that selectively transmits a wavelength of green visible light or a blue color filter (B) that selectively transmits a wavelength of blue visible light is exemplified. The color filter 423 is configured by adding a dye or a pigment to an acrylic resin.

The planarizing film 424 performs a function of planarizing unevenness generated by arranging the color filter 423. As a material for forming the planarizing film 424, a transparent resin, such as an acrylic resin, is exemplified.

The transparent electrode 425 performs a function of applying a predetermined voltage to liquid crystal of the liquid crystal layer 41 positioned between a transparent electrode 432 of the second base 43 to be described below and the transparent electrode, and has a light transmitting property in a direction crossing a principal surface thereof. The transparent electrodes 425 perform a function of propagating a predetermined signal (image signal) and are arranged to mainly extend in a direction CD. As a material for forming the transparent electrode 425, a light transmitting conductive member, such as ITO and SnO, is exemplified.

The alignment film 426 performs a function of aligning liquid crystal molecules of the liquid crystal layer 41, which is oriented in a macroscopically random direction (having low regularity), in a predetermined direction, and is formed on the transparent electrode 425. As a material for forming the alignment film 426, a polyimide resin is exemplified.

The second base 43 includes a transparent substrate 431, the transparent electrode 432, and an alignment film 433.

The transparent substrate 431 is a member that supports the transparent electrode 432 and the alignment film 433, and seals the liquid crystal layer 41. The transparent substrate 431 is configured to appropriately transmit light in a direction crossing a principal surface thereof. As a material for forming the transparent substrate 431, the same material as the formation material of the transparent substrate 421 is exemplified.

The transparent electrode 432 performs a function of applying a predetermined voltage to liquid crystal of the liquid crystal layer 41 positioned between the transparent electrode 425 of the first base 42 and the transparent electrode, and transmits light incident from one side to the other side. The transparent electrodes 432 perform a function of propagating a signal (scanning signal) to control a voltage applied state (ON) or a voltage unaplied state (OFF) with respect to the liquid crystal layer 41, and are arranged to mainly extend in a direction vertical to a plane of paper of FIG. 7 (for example, direction EF in FIG. 1). As a material for forming the transparent electrode 432, the same material as the formation material of the transparent electrode 425 is exemplified.

The alignment film 433 performs a function of aligning liquid crystal molecules of the liquid crystal layer 41, which is oriented in a macroscopically random direction (having low regularity), in a predetermined direction, and is formed on the transparent electrode 432. As a material for forming the alignment film 433, the same material as the formation material of the alignment film 426 is exemplified.

The sealing member 44 performs a function of sealing the liquid crystal layer 41 between the first base 42 and the second base 43, and bonding the first base 42 and the second base 43 in a state where they are away from each other at a predetermined gap. As the sealing member 44, an insulating resin or a sealing resin is exemplified.

The backlight 50 performs a function of irradiating light from one side to the other side of the liquid crystal display panel 40, and adopts an edge light type. The backlight 50 includes a light source 51 and a light guide plate 52. The light source 51 performs a function of emitting light to the light guide plate 52 and is disposed on the side of the light guide plate 52. As the light source 51, a cathode fluorescent lamp (CFL), a light emitting diode (LED), a halogen lamp, a xenon lamp or electro-luminescence (EL) is exemplified. The light guide plate 52 performs a function of approximately equally guiding light from the light source 51 over the entire bottom surface of the liquid crystal display panel 40. The light guide plate 52 generally includes a reflection sheet, a diffusion sheet, and a prism sheet. The reflection sheet (not illustrated) performs a function of reflecting light and is provided on a back surface. The diffusion sheet (not illustrated) performs a function of diffusing light to perform uniform surface emitting and is provided on a surface. The prism sheet (not illustrated) performs a function of condensing light in an approximately constant direction and is provided on the surface. As a material for forming the light guide plate 52, a transparent resin, such as an acrylic resin and a polycarbonate resin, is exemplified. The backlight 50 is not limited to the edge light type in which the light source 51 is disposed on the side of the light guide plate 52, and may adopt other type, such as a direct type, in which the light source 51 is disposed on the side of the back surface of the liquid crystal display panel 40.

The casing 60 performs a function of storing the liquid crystal display panel 40 and the backlight 50 and includes an upper casing 61 and a lower casing 62. As a material for forming the casing 60, a resin such as a polycarbonate resin, a metal such as aluminum or an alloy such as stainless (SUS) is exemplified.

Next, an example of a fixing method of the touch panel X and the liquid crystal display panel Z based on a both-sided tape T will be described. A fixing member that is used in the fixing method of the touch panel X and the liquid crystal display device Z is not limited to the both-sided tape T. For example, an adhesive member, such as a thermosetting resin and an ultraviolet curable resin, may be adopted or a fixing structure that physically fixes the touch panel X and the liquid crystal display device Z may be adopted.

First, one surface of the both-sided tape T is bonded to a predetermined region on a top surface of the upper casing 61 of the liquid crystal display device Z. In this embodiment, the predetermined region is a region R that is positioned to surround the display region P of the liquid crystal display device Z, as illustrated in FIG. 8.

Next, the touch panel X is aligned to the liquid crystal display device Z where the both-sided tape T is bonded, and the insulating substrate 21 of the touch panel X and the upper casing 61 of the liquid crystal display device Z are bonded through the both-sided tape T. Thereby, the touch panel X and the liquid crystal display device Z are fixed.

Since the touch panel display device Y according to the invention includes the touch panel X1, the same effect as the effect of the above-described touch panel X1 can be achieved. That is, in the touch panel display device Y, the device size can be sufficiently decreased, and uniformity of touch sensitivity can be sufficiently improved while the influence due to the thermal stress difference is reduced.

The specific embodiments of the invention have been described. However, the invention is not limited thereto and various changes can be made without departing from the spirit of the invention.

In the touch panels X1 and X2, the distance D1 of one end (portion that is electrically connected to the first region 12a) of the inter-base connection wiring electrodes 23 and 23' and the second resistive films 22 and 22' may be set to be approximately equal to the distance D2 of one end (portion that is electrically connected to the second region 12b) of the inter-base connection wiring electrodes 24 and 24' and the second resistive films 22 and 22'. According to this configuration, a gap between the first base 10 and the second base 20 at the side of one end of the inter-base connection wiring electrodes 23 and 23' and the side of one end of the inter-base connection wiring electrodes 24 and 24' can be controlled in almost the same state. Therefore, uniformity of touch sensitivity can be improved.

In the first connecting member 30A of each of the touch panels X1 and X2, the width W1 in plan view in a portion where the second connecting member 30B is positioned between the first connecting member 30A and the second resistive film 22 may be set to be smaller than the width W2 in plan view in the other portion. According to this configuration, since the second connecting member 30B exists, sufficient adhesiveness and high reliability can be secured, and the device size can be decreased.

In the touch panels X1 and X2, the first particle 31 is configured to directly contact the first resistive film 12, but the invention is not limited to this configuration. For example, the same wiring line as the inter-base connection wiring electrode 23 may be formed on the transparent insulating base 11 and the first particle 31 and the first resistive film 12 may be electrically connected through the wiring line.

In the touch panels X1 and X2, a phase-difference film may be further disposed in at least one of the first base 10 and the second base 20. The phase-difference film is an optical compensating member that converts a state of linearly polarized light whose state is converted into an elliptical polarization state by birefringence of the liquid crystal from the elliptical polarization state to a state similar to a linear polarization state. As a material for forming the phase-difference film, polycarbonate (PC), polyvinyl alcohol (PVA), polyarylate (PA), polysulfone (Psu) or polyolefin (PO) is exemplified. However, the PC is preferable from the point of view of consistency with wavelength dispersion of the liquid crystal, and the PO that has a photoelastic coefficient smaller than that of the PC is preferable from the point of view of adaptability with respect to a circularly polarizing plate. According to this configuration, a contrast ratio of a display image can be increased.

In the touch panels X1 and X2, a polarizing film may be further disposed in at least one of the first base 10 and the second base 20. The polarizing film performs a function of selectively transmitting light in a predetermined vibration direction. As a material for forming the polarizing film, an iodine material is exemplified. According to this configuration, a shutter function of light transmitted through the polarizing film can be realized.

In the touch panels X1 and X2, a film that is subjected to anti-glare processing or reflection prevention coat processing may be further disposed in at least one of the first base 10 and the second base 20. According to this configuration, external light reflection can be reduced.

The transparent insulating bases 11, 21, and 21' of the touch panels X1 and X2 may be replaced by any one of the phase-difference film, the polarizing film, and the film subjected to the anti-glare processing or the reflection prevention coat processing.

The touch panels X1 and X2 have the insulating layers 27 and 27', respectively. However, the touch panels X1 and X2 may not have the insulating layers 27 and 27', from the point of view of manufacturing efficiency.

In the touch panels X1 and X2, the first connecting members 30A and 30A' are integrally provided to surround the second resistive films 22 and 22', but the invention is not limited thereto. For example, the first connecting members 30A and 30A' may be separately provided to coat the first connecting members 30A and 30A' in a partially opened form, bond the first base 10 and the second base 20 to each other, inject air through the openings, and seal the openings using the first connecting members 30A and 30A' or non-conductive adhesive members (ultraviolet curable resins). However, main objects (for example, 90% or more) that surround the second resistive films 22 and 22' are set to become the first connecting members 30A and 30A'.

## Claims

1. A touch panel comprising:
a first base having a first resistive film;
a second base having a second resistive film and a wiring electrode; and
a conductive connecting member electrically connecting the first resistive film and the wiring electrode, the first base and the second base being bonded so that the first resistive film and the second resistive film face each other, wherein
the wiring electrode has a first electrode portion that is electrically connected to a first region of the first resistive film and a second electrode portion that is electrically connected to a second region of the first resistive film different from the first region, and
the conductive connecting member has a first connecting member and a second connecting member, the first connecting member being positioned to surround the second resistive film in plan view, electrically connecting the first region and the first electrode portion, and containing an adhesive component, and the second connecting member being positioned between the first connecting member and the second resistive film in plan view and electrically connecting the second region of the first resistive film and the second electrode portion.

2. The touch panel of claim 1, wherein a distance between a region of the first electrode portion electrically connected to the first region and the second resistive film is substantially equal to a distance between a region of the second electrode portion electrically connected to the second region and the second resistive film.

3. The touch panel of claim 1, wherein
the second connecting member contains an adhesive component, and
in the first connecting member, the width in plan view of a portion where the second connecting member is positioned between the first connection member and the second resistive film is smaller than that of the other portion.

4. The touch panel of claim 1, wherein the first connecting member and the second connecting member are formed of same material.

5. The touch panel of claim 1, wherein the adhesive component of the conductive connecting member is a thermosetting resin.

6. A touch panel, comprising:
a first base that has a first resistive film;
a second base that has a wiring electrode and a second resistive film, the wiring electrode including a first electrode portion and a second electrode portion, the first electrode portion being electrically connected to a first region of the first resistive film, a second electrode portion being electrically connected to a second region of the first resistive film different from the first region;
a first connecting member that is positioned to surround the second resistive film in plan views, electrically connects the first region of the first resistive film and the first electrode portion, and contains an adhesive component; and
a second connecting member that is positioned between the first connecting member and the second resistive film in plan view and electrically connects the second region and the second electrode portion.

7. The touch panel of claim 6, wherein a distance between a region of the first electrode portion electrically connected to the fist region and the second resistive film is substantially equal to a distance between a region of the second electrode portion electrically connected to the second region and the second resistive film.

8. The touch panel of claim 6, wherein
the second connecting member contains an adhesive component, and
in the first connecting member, the width in plan view of a portion where the second connecting member is positioned between the first connecting member and the second resistive film is smaller than that of the other portion.

9. The touch panel of claim 6, wherein the first connecting member and the second connecting member are formed of same material.

10. The touch panel of claim 6, wherein the adhesive component is a thermosetting resin.

11. A touch panel display device, comprising:
a display panel; and
the touch panel of claim 1 where a principal surface of the first base or the second base is disposed to face a principal surface of the display panel.
